# EUROPEAN PATENT SPECIFICATION

(11) **EP 2 765 762 B1**
(45) Date of publication and mention of the grant of the patent: **10.07.2019**
(21) Application number: 14154157.3
(22) Date of filing: 06.02.2014
(51) Int. Cl.: H04M 1/725, G10L 15/18, G06K 9/00, G10L 15/22, G06F 3/16, G10L 15/25

(54) **Mobile terminal supporting a voice talk function**
Tragbares Endgerät zum Unterstützen einer Sprachfunktion
Terminal portable supportant une fonction de conversation vocale

(30) Priority: 07.02.2013 KR 20130013757
(43) Date of publication of application: 13.08.2014
(73) Proprietor: Samsung Electronics Co., Ltd., Gyeonggi-do 443-742 (KR)
(72) Inventor: Ahn, Jihyun, 443-742 Gyeonggi-do (KR); Kim, Sora, 443-742 Gyeonggi-do (KR); Kim, Jinyong, 443-742 Gyeonggi-do (KR); Kim, Hyunkyoung, 443-742 Gyeonggi-do (KR); Kim, Heewoon, 443-742 Gyeonggi-do (KR); Ahn, Yumi, 443-742 Gyeonggi-do (KR)
(74) Representative: HGF Limited

(56) References cited:
- EP-A1- 2 244 252
- EP-A2- 1 333 650
- WO-A1-2007/141052
- WO-A1-2010/070584
- US-A1- 2002 135 618
- US-A1- 2012 011 477

## Description

### Background of the invention

### 1. Field of the Invention

The present invention relates to a voice talk function-enabled mobile terminal and a voice talk control method. More particularly, certain embodiments of the present invention relate to a voice talk function-enabled terminal and voice talk control method for outputting content distinctly according to a current emotion, age or gender of the user.

### 2. Description of the Related Art

Conventional voice talk functions operate in such a way that an answer to a user's question is selected from a basic answer set provided by the terminal manufacturer. Accordingly, such voice talk functions are limited in that the same question is answered with the same answer regardless of the user. This means that when multiple users use the voice talk function-enabled mobile terminal, the conventional voice talk function does not provide an answer optimized per user.

EP2244252 A1 discloses a voice-recognition method for an electronic device comprising the steps of receiving an input voice of a user, determining characteristics of the user through an image of the user as well as the input voice, recognizing the input voice based on the determined characteristics of the user, performing an operation corresponding to the recognized input voice; the method may also include the steps of generating a responsive voice to the input voice based on the determined characteristics of the user, and outputting the generated responsive voice.

EP-1333650-A2 discloses a method and system for facilitating user access to services through a wireless device of a user. The method involves recommending to a user a subset of services from a plurality of services available to the user in which each recommended service of the subset has at least one voice short-cut associated therewith, and selecting a service to be accessed through the user's wireless device from the subset of services according to a voice command by the user corresponding to the voice short-cut of the service.

US-2002/0135618-A1 discloses systems and methods for performing focus detection, referential ambiguity resolution and mood classification in accordance with multimodal input data, in varying operating conditions, in order to provide an effective conversational computing environment for one or more users.

WO-2010/070584-A1 discloses a method of adapting communications in a communication system comprising at least two terminals, a signal carrying at least a representation of at least part of an information content of an audio signal captured at a first terminal and representing speech is communicated between the first terminal and a second terminal.

### SUMMARY OF THE INVENTION

Certain embodiments of the present invention provide a mobile terminal for outputting content reflecting a user's current emotional state, age, and gender, and a voice talk control method thereof.

In accordance with a first aspect of the present invention, a mobile terminal supporting a voice talk function is provided. The terminal comprises: a display unit, a camera unit configured to acquire an image of a user, an audio processing unit, and a control unit configured to: acquire a first criterion associated with the user based on the image of the user; determine whether a user's speech input is detected through the audio processing unit; select content corresponding to the user's speech input based also on the first criterion, if the user's speech input is detected; acquire a second criterion associated with the user based on the user's speech input; determine a content output scheme based on the second criterion; change at least one of words constituting the selected content, output speed of the selected content, and output size of the selected content, based on the determined content output scheme; and output the selected content through at least one of the display unit and the audio processing unit according to the content output scheme.

In accordance with a second aspect of the present invention, a voice talk method of a mobile terminal is provided. The method includes: acquiring an image of a user, acquiring a first criterion associated with the user based on the image of the user; determining whether a user's speech input is detected through an audio processing unit of the mobile terminal; selecting content corresponding to the user's speech input and based also on the first criterion, if the user's speech input is detected; acquiring a second criterion associated with the user based on the user's speech input; determining a content output scheme based on the second criterion; changing at least one of words constituting the selected content, output speed of the selected content, and output size of the selected content, based on the determined content output scheme; and outputting the selected content through at least one of a display unit and the audio processing unit of the mobile terminal according to the content output scheme.

Another aspect of the invention provides a computer program comprising instructions arranged, when executed, to implement a method in accordance with any one of the above-described aspects. A further aspect provides machine-readable storage storing such a program.

### BRIEF DESCRIPTION OF THE DRAWINGS

The above and other aspects, features and advantages of embodiments of the present invention will become apparent from the following detailed description taken in conjunction with the accompanying drawings, in which:
FIG. 1 is a block diagram illustrating a configuration of the mobile terminal 100 according to an embodiment of the present invention;
FIG. 2 is a flowchart illustrating a voice talk function control method according to an embodiment of the present invention;
FIG. 3 is a table mapping emotional states and contents for use in the voice talk control method according to an embodiment of the present invention;
FIGs. 4 and 5 are diagrams of screen displays illustrating content output based on a first criterion according to an embodiment of the present invention;
FIG. 6 is a flowchart illustrating details of the first criterion acquisition step of FIG. 2;
FIG. 7 is a table mapping emotional states and contents for use in the voice talk control method according to an embodiment of the present invention;
FIGs. 8 and 9 are diagrams of screen displays illustrating content output based on the first criterion according to an embodiment of the present invention;
FIG. 10 is a table mapping emotional states and contents for use in the voice talk control method according to an embodiment of the present invention;
FIG. 11 is a diagram of screen displays illustrating content output based on the first criterion according to an embodiment of the present invention; and
FIG. 12 is a schematic diagram illustrating a system for voice talk function of the mobile terminal according to an embodiment of the present invention.

### DETAILED DESCRIPTION OF EMBODIMENTS OF THE PRESENT INVENTION

The present invention will be described more fully hereinafter with reference to the accompanying drawings, in which illustrative embodiments of the invention are shown. This invention may, however, be embodied in many different forms and should not be construed as limited to the embodiments set forth herein. Rather, these embodiments are provided so that the description of this invention will be thorough and complete, and will fully convey the scope of the invention to those skilled in the art. The present invention will be defined by the appended claims.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

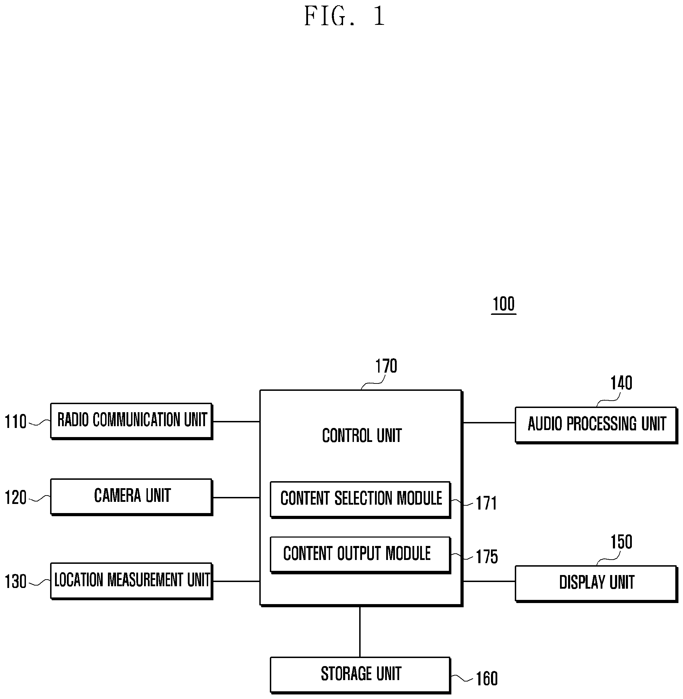

FIG. 1 is a block diagram illustrating a configuration of the mobile terminal 100 according to an embodiment of the present invention.

Referring to FIG. 1, the mobile terminal 100 includes a radio communication unit 110, a camera unit 120, a location measurement unit 130, an audio processing unit 140, a display unit 150, a storage unit 160, and a control unit 170.

The radio communication unit 110 transmits/receives radio signals carrying data. The radio communication unit 110 may include a Radio Frequency (RF) transmitter configured to up-convert and amplify the transmission signals, and a RF receiver configured to low noise amplify and down-convert the received signals. The radio communication unit 110 transfers the data received over a radio channel to the control unit 170 and transmits the data output from the control unit 170 over the radio channel.

The camera unit 120 receives video signals. The camera unit 120 processes the video frames of still and motion images obtained by an image sensor in a video conference mode or an image shooting mode. The camera unit 120 may output the processed video frame to the display unit 150. The video frame processed by the camera unit 120 may be stored in the storage unit and/or transmitted externally by means of the radio communication unit 110.

The camera unit 120 may include two or more camera modules depending on the implementation of the mobile terminal 100. For example, the mobile terminal 100 may include a camera facing the same direction as the screen of the display unit 150 and another camera facing the opposite direction from the screen.

The location measurement unit 130 may be provided with a satellite signal reception module to measure the current location of the mobile terminal 100 based on signals received from satellites. By means of the radio communication unit 110, the location measurement unit 130 may also measure the current location of the mobile terminal 100 based on received radio communication signals.

The audio processing unit 140 may be provided with a codec pack including a data codec for processing packet data and audio codec for processing audio signal such as voice. The audio processing unit 140 may convert digital audio signals to analog audio signals by means of the audio codec so as to output the analog signal through a speaker (SPK) and convert the analog signal input through a microphone (MIC) to the digital audio signals.

The display unit 150 displays menus, input data, function configuration information, etc. to the user in a visual manner. The display unit 150 outputs a booting screen, a standby screen, a menu screen, a telephony screen, and other application execution screens.

The display unit 150 may be implemented with one of Liquid Crystal Display (LCD), Organic Light Emitting Diodes (OLED), Active Matrix OLED (AMOLED), flexible display, and a 3 Dimensional (3D) display.

The storage unit 160 stores programs and data necessary for operation of the mobile terminal 100 and may be divided into a program region and a data region. The program region may store basic programs for controlling the overall operation of the mobile terminal 100, an Operating System (OS) for booting the mobile terminal 100, multimedia content playback applications, and other applications for executing optional functions such as voice talk, camera, audio playback, and video playback. The data region may store the data generated in astute of using the mobile terminal 100 such as still and motion images, phonebook, and audio data.

The control unit 170 controls overall operations of the components of the mobile terminal 100. The control unit 170 receives a user's speech input through the audio processing unit 140 and controls the display unit 150 to display content corresponding to the user's speech in a voice talk function executed according to the user's manipulation. The control unit 170 also may play content corresponding to the user's speech through the audio processing unit 140. Here, the content may include at least one of multimedia content such as text, picture, audio, movie, and video clip, and information such as weather, recommended locations, and favourite contacts.

In more detail, the control unit 170 recognizes the user's speech to obtain the corresponding text. Next, the control unit 170 retrieves content corresponding to the text and outputs the content through at least one of the display unit 150 and the audio processing unit 160. Finally, the control unit 170 may check the meaning of the text to retrieve the corresponding content among related content stored in the storage unit 160. In this way, using interactive speech communication, the user may be provided with the intended information through the related stored content. For example, if the user speaks "Today's weather?" the mobile terminal 100 receives the user's speech input through the audio processing unit 140. Then the mobile terminal 100 retrieves the content (weather information) corresponding to the text "today's weather" acquired from the user's speech and outputs the retrieved content through at least one of the display unit 150 and the audio processing unit 140.

Particularly, in an embodiment of the present invention, the control unit 170 may select the content to be output through the display unit 150 and/or the audio processing unit 140 depending on the user's current emotion, age, and gender as well as the text recognised from the user's speech. In order to accomplish this, the control unit 170, according to an embodiment of the present invention, may include a content selection module 171 and a content output module 175.

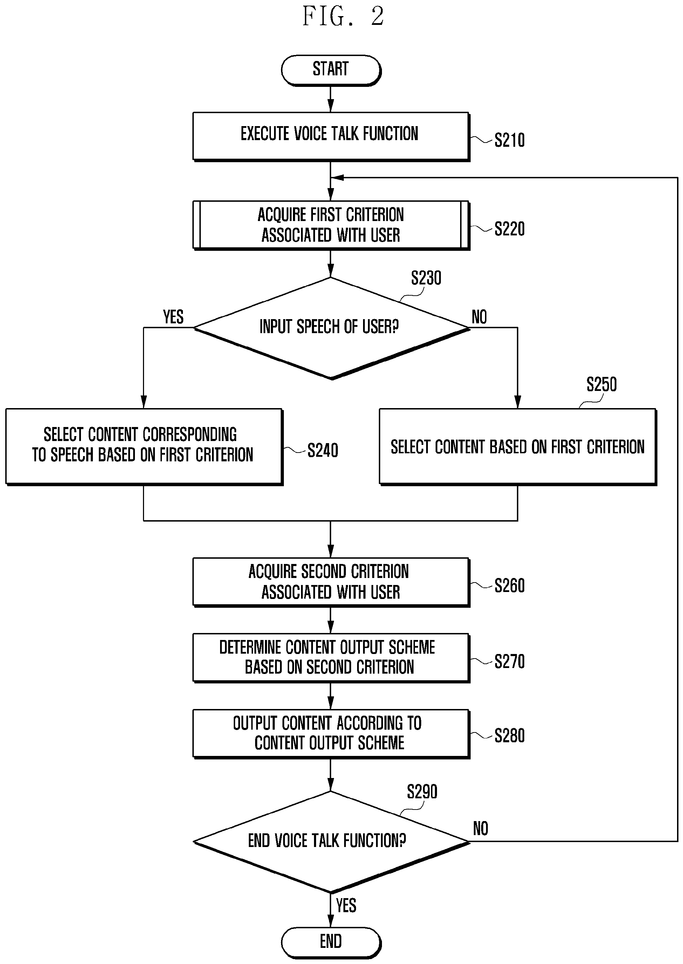

FIG. 2 is a flowchart illustrating a voice talk function control method according to an embodiment of the present invention.

Referring to FIG. 2, if the voice talk function is executed at step S210, the content selection module 171 acquires a first criterion associated with the user at step S220. Here, the first criterion may include a current emotional state of the user. The emotional state denotes a mood or feeling felt such as joy, sorrow, anger, surprise, etc.

The content selection module 171 determines whether a user's speech input is detected at step S230. If a user's speech input is detected through the audio processing unit 140, the content selection module 171 selects the content corresponding to the user' speech input based also on the first criterion at step S240. In more detail, the content selection module 171 obtains a phrase from the user's speech. Next, the content selection module 171 retrieves contents corresponding to the phrase. Next, the content selection module 171 selects one of the contents using the emotional state information predetermined based on the first criterion. Here, the emotional state-specific content information may be preconfigured and stored in the storage unit 160. Alternatively, the processed may be reversed such that the content selection module 171 retrieves the contents first based on the first criterion and then selects one of the contents corresponding to the phrase.

Otherwise, if no user's speech input is detected at step S230, the content selection module 171 selects the content based only on the first criterion at step S250.

After content has been selected either at step S240 or S250, the content output module 175 acquires a second criterion associated with the user at step S260. Here, the second criterion may include at least one of the user's age and gender. The user's age may be the accurate user's age or one of predetermined age groups. For example, the user's age may be indicated with a precise number such as 30 or 50, or with an age group such as 20's, 50's, child, adult, and elder.

In detail, the content output module receives the user's face image from the camera unit 120. The content output module 175 may acquire the second criterion automatically from the user's face image based on per-age group or per-gender average face information stored in the storage unit 160. The content output module 175 also receives the user's speech input through the audio processing unit 140. Alternatively, the content output module 175 may acquire the second criterion from the user's speech using the per-age group or per-gender average speech information. The content output module 175 also may acquire the second criterion based on the words constituting the phrase obtained from the user's speech. At this time, the content output module 165 may acquire the second criterion using the per-age group or per-gender words. For example, if a phrase "I want new jim-jams" is acquired from the user's speech, it is possible to judge the user as a child based on the word "jim-jams."

The content output module 175 may acquire the second criterion based on both the user's face image and speech. Although the description is directed to the case where the content output module 175 acquires the second criterion based on the user's face image and/or speech, the various embodiments of the present invention are not limited thereto, and may include the user inputting the second criterion. In this case, the second criterion input by the user may be stored in the storage unit 160. The content output module 175 performs predetermined functions based on the second criterion stored in the storage unit 160.

If the second criterion is acquired, the content output module 175 determines a content output scheme based on the second criterion at step S270. That is, the content output module 175 determines the content output scheme by changing the words constituting the content selected by the content selection module 171, output speed of the selected content, and output size of the selected content.

In more detail, the content output module 175 may change the words constituting the selected content to words appropriate for the second criterion based on the per-age group word information or per-gender word information. For example, if the content includes "Pyjamas store" and if the user belongs to the age group "children," the content output module 175 changes the word "Pyjamas" for the word "Jim-jams" appropriate for children.

The content output module 175 determines the output speed of the selected content based on the per-age group output speed information or per-gender output speed information stored in the storage unit 160. For example, if the user belongs to the age group of "child" or "elder", the content output module 175 may decrease the speech playback speed of the selected content.

The content output module 175 also determines the output size of the selected content based on the per-age group output size information or per-gender output size information. For example, if the user belongs to the age group "elder", the content output module 175 may increase the output volume of the selected content and the display size (e.g. font size) of the selected content based on the per-age group output size information. The storage unit 160 stores a table which contains a mapping of the age group or gender to the content output scheme (content output speed and size), and the content output module 175 determines the output scheme of the selected content based on the data stored in the table mapping. If the content output scheme is selected, the content output module 175 outputs the content selected by the content selection module 171 through the display unit 150 and audio processing unit 140 according to the content output scheme at step S280.

Afterward, if a voice talk function termination request is detected at step S290, the control unit 170 ends the voice talk function. If the voice talk function termination request is not detected at step S290, the control unit 170 returns the procedure to step S220.

As described above, the voice talk control method of the invention selects the content appropriate for the current emotional state of the user and determines the content output scheme according to the user's age and/or gender so as to provide the user with the customized content. This method makes it possible to provide more realistic voice talk functionality.

Meanwhile if the phrase acquired from the user's speech input through the audio processing unit 140 is a request for changing the content output scheme, the content output module 175 changes the content output scheme according to the phrase. For example, after the content has been output according to the content output scheme determined based on the second criterion, if the user speaks a phrase "Can you speak faster and more quietly?," the control output module 175 increases the speech playback speed one step and decreases the audio volume one step.

The content output module 175 may store the changed content output scheme in the storage unit 160. Afterward, the content output module 175 changes the content output scheme determined based on the second criterion using the previously stored content output scheme history. The content output module 175 may output the selected content according to the changed content output scheme.

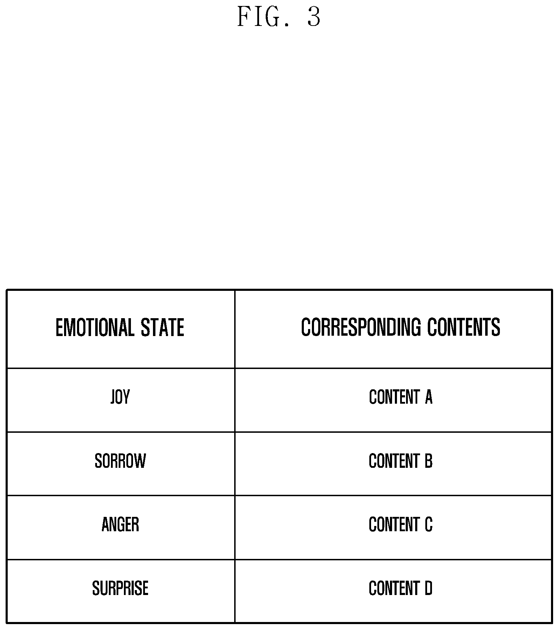

A content output procedure according to an embodiment of the invention is described hereinafter with reference to FIGs. 3 to 5.

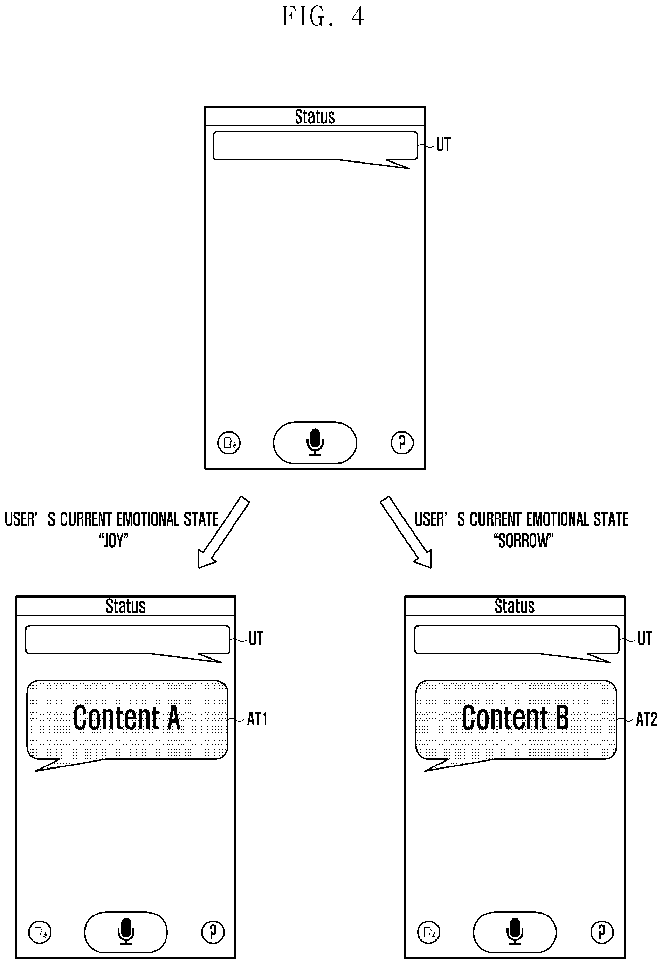

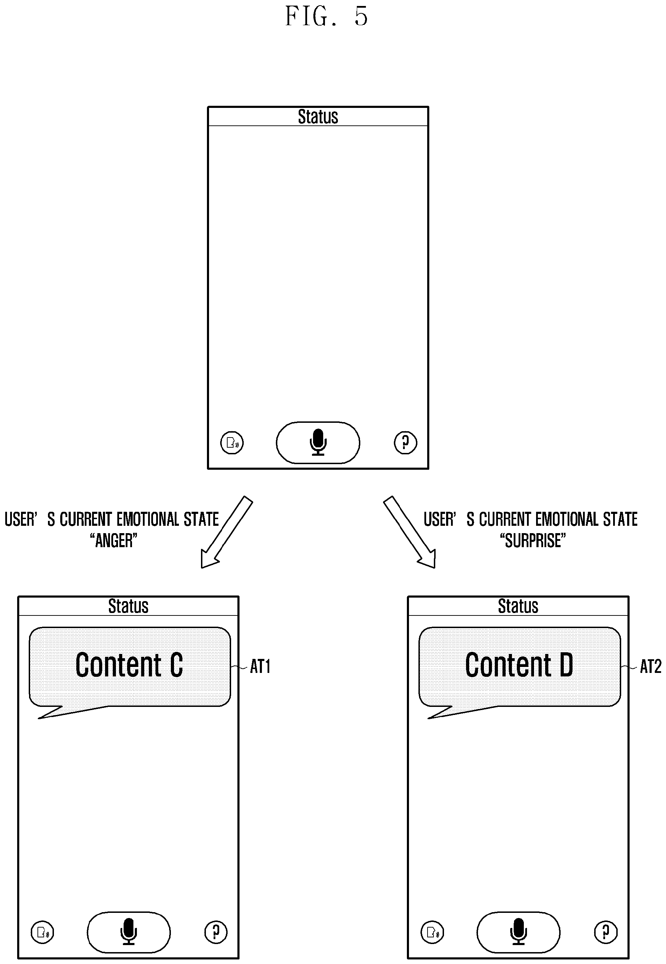

FIG. 3 is a table mapping emotional states and contents for use in the voice talk control method according to an embodiment of the present invention. FIGs. 4 and 5 are diagrams of screen displays illustrating content output based on the first criterion according to an embodiment of the present invention.

Referring to FIG. 3, the contents are pre-mapped to the emotional states. The emotional state "joy" is mapped to the content A, the emotional state "sorrow" to content B, the emotional state "anger" to content C, and the emotional state "surprise" to content D. These emotional states and contents are pre-mapped and stored in the storage unit 160.

The content selection module 171 may select the content appropriate for the first criterion (user's current emotional state) among per-emotional state contents.

Referring to FIG. 4, on the basis of the phrase UT acquired from the user's speech input through the audio processing unit 140 and the first criterion (user's current emotional state), the content selection module 171 selects content A (AT1) for the emotional state "joy" and content B (AT2) for the emotional state "sorrow."

Referring to FIG. 5, the content selection module 171 selects content C (AT1) for the emotional state "anger" and content D (AT2) for the emotional state "surprise," on the basis of the first criterion (user's current emotional state).

Although FIG. 3 is directed to a mapping of one content item per emotional state, the present invention is not limited thereto but may be embodied to map multiple content items per emotional state. In this case, the content selection module 171 may select one of the multiple contents corresponding to the first criterion (user's current emotional state) randomly.

The contents may be grouped per emotional state. A "content group" denotes a set of contents having the same/similar property. For example, a content group may be classified into one of "action" movie content group, "R&B" music content group, etc. In this case, the content selection module 171 may select one of the contents of the content group fulfilling the first criterion (user's current emotional state) randomly.

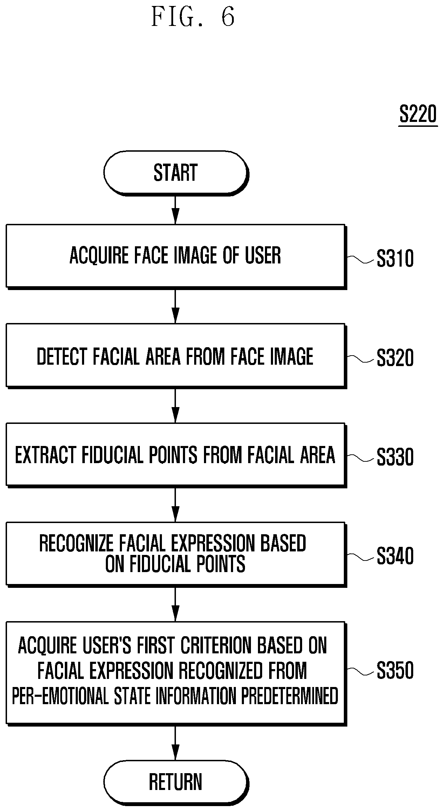

FIG. 6 is a flowchart illustrating details of the first criterion acquisition step S220 of FIG. 2.

Referring to FIG. 6, the content selection module 171 acquires a user's face image from the camera unit 120 at step S310 and detects the face area from the face image at step S320. That is, the content selection module 171 detects the face area having eyes, nose, and mouth.

Next, the content selection module 171 extracts the fiducial points of the eyes, nose, and mouth at step S330 and recognizes the facial expression based on the fiducial points at step S340. That is, the content selection module 171 recognizes the current expression of the user based on per-expression fiducial point information stored in the storage unit 160.

Afterwards, the content selection module 171 retrieves the first criterion automatically based on the expression determined based on the predetermined per-emotional state expression information at step S350. Here, the per-emotional state expression information may be pre-configured and stored in the storage unit 160.

Although the description is directed to the case where the content selection module 171 acquires the first criterion based on the user's face image, the present invention is not limited thereto but may be embodied for the user to input the first criterion.

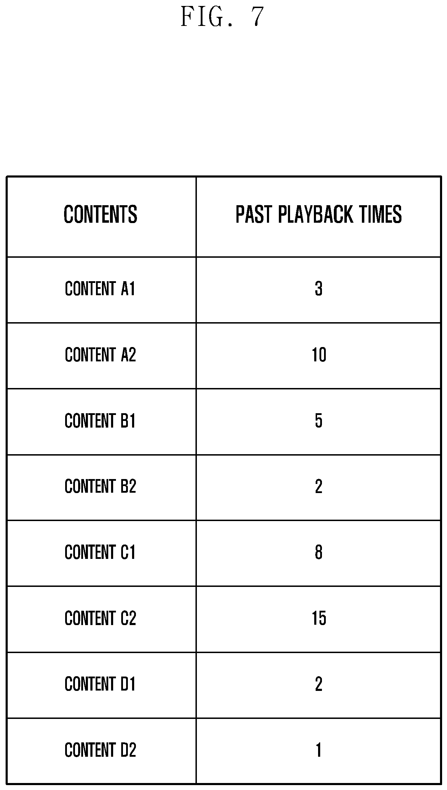

Another content output procedure according to an embodiment of the present invention is described hereinafter with reference to FIGs. 7 to 9.

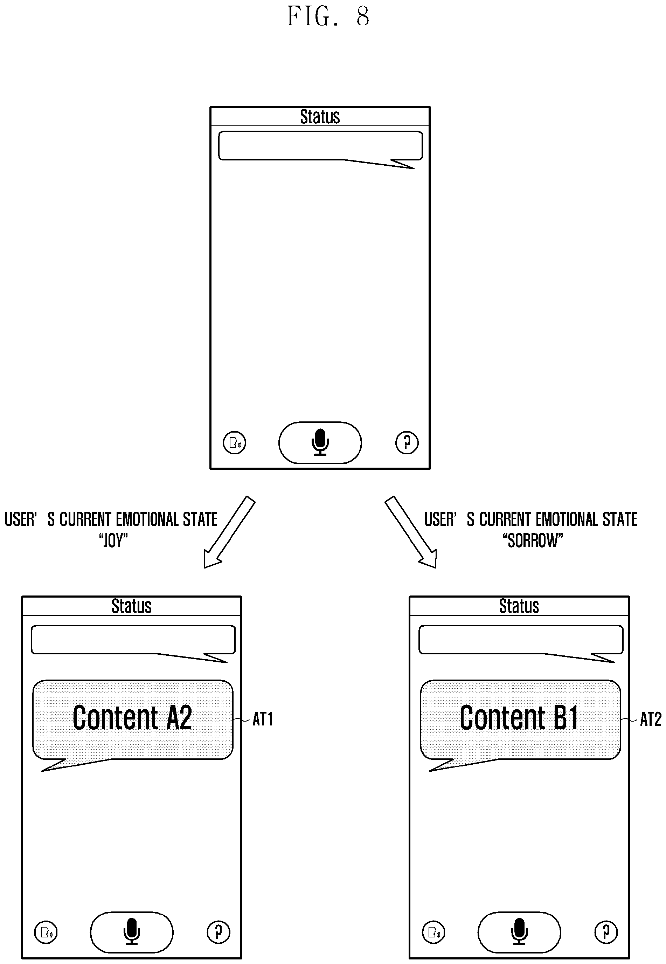

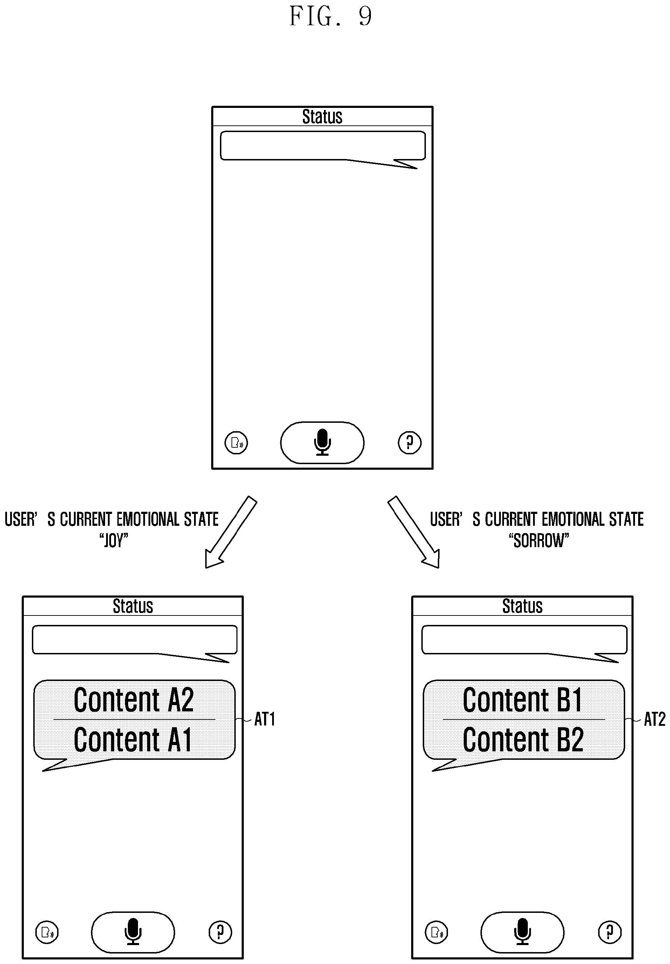

FIG. 7 is a table mapping emotional states and contents for use in the voice talk control method according to an embodiment of the present invention. FIGs. 8 and 9 are diagrams of screen displays illustrating content output based on the first criterion according to an embodiment of the present invention.

The content selection module 171 may select content based on the first criterion (user's current emotional state) additionally using the user's past content playback history. The past content playback history is stored in the storage unit 160 and updated whenever the content is played according to the user's manipulation.

Referring to FIG. 7, the numbers of playback or the respective content items are stored in the storage unit 160. The content A1 is played three times, the content A2 ten times, the content B1 five times, the content B2 twice, the content C1 eight times, the content C2 fifteen times, the content D1 twice, and the content D2 once. The contents A1 and A2 are mapped to the emotional state "joy," the contents B1 and B2 to the emotional state "sorrow," the contents C1 and C2 to the emotional state "anger," and the contents D1 and D2 to the emotional state "surprise" (see FIG. 3).

The content selection module 171 may select one of the multiple contents appropriate for the first criterion (user's current emotional state) based on the past content playback history.

Referring to FIG. 8, if the first criterion (user's current emotional state) is "joy," the content selection module 171 selects the content A2 (AT1) which has been played more frequently among the contents A1 and A2 mapped to the first criterion (user's current emotional state). If the first criterion (user's current emotional state) is "sorrow," the content selection module 171 selects the content B1 (AT2) which has been played more frequently among the contents B1 and B2 mapped to the first criterion (user's current emotional state).

At this time, the content selection module 171 may select the multiple contents mapped to the first criterion (user's current emotional state). Then the content output module 175 may determine the output positions of the multiple contents based on the past contents playback history.

Referring to FIG. 9, if the first criterion (user's current emotional state) is "joy," the content selection module 171 selects both the contents A1 and A2 as the contents (AT1) fulfilling the first criterion (user's current emotional state). Then the content output module 175 arranges the content A1 below the content A2 (AT1) which has been played more frequently. If the first criterion (user's current emotional state) is "sorrow," the content selection module 171 selects both the contents B1 and B2 as the contents (AT2) fulfilling the first criterion (user's current emotional state). Then the content output module 175 arranges the content B2 below the content B1 (AT2) which has been played more frequently.

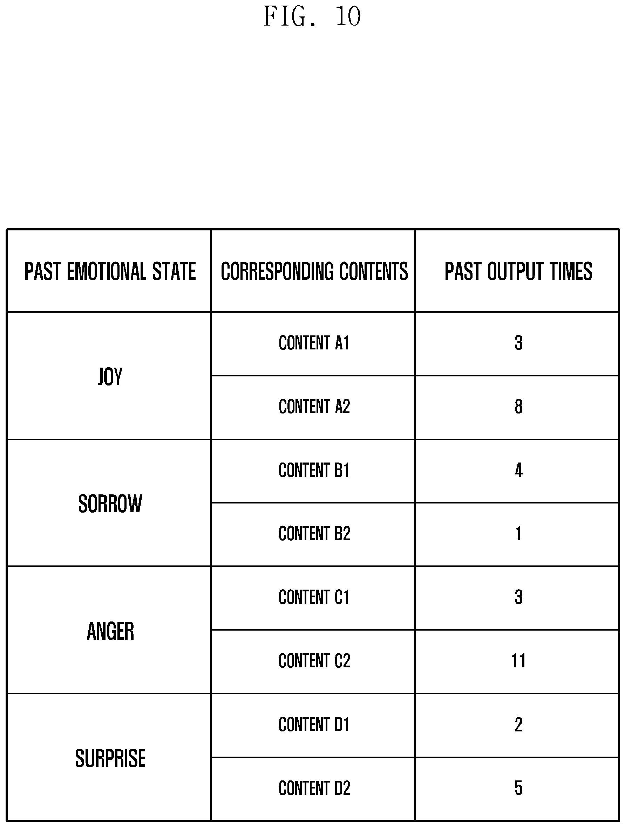

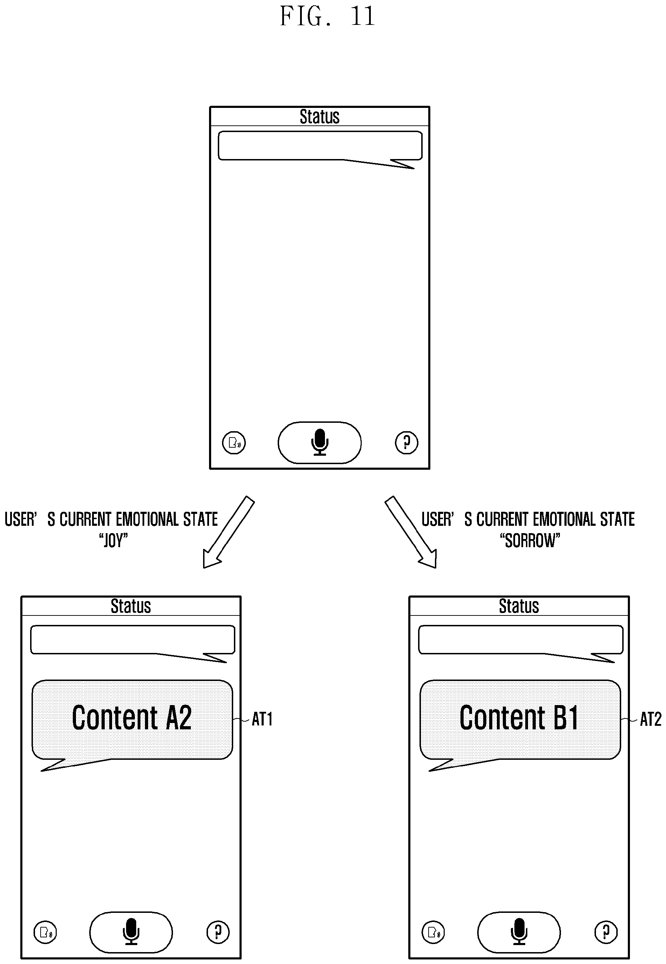

Another content output procedure according to an embodiment of the present invention is described hereinafter with reference to FIGs. 10 and 11.

FIG. 10 is a table mapping emotional states and contents for use in the voice talk control method according to an embodiment of the present invention. FIG. 11 is a diagram of screen displays for illustrating content output based on the first criterion according to an embodiment of the present invention.

The content selection module 171 may select the content based on the first criterion (user's current emotional state) and the user's past emotional state-based content output history. The user's past emotional state-based content output history is stored in the storage unit 160 and updated whenever the content is output in accordance with the user's emotional state while the voice talk function is activated.

Referring to FIG. 10, the numbers of past emotional state-based output times of the contents are stored in the storage unit 160. The content A1 has been output three times, the content A2 eight times, the content B1 four times, the content B2 once, the content C1 three times, the content C2 eleven times, the content D1 twice, and the content D2 five times.

The content selection module 171 may select one of the multiple contents mapped to the first criterion (user's current emotional state) using the past emotional state-based content output history.

Referring to FIG. 11, if the first criterion (user's current emotional state) is "joy," the content selection module 171 selects the content A2 which has been output more frequently in association with the user's past emotional state as the content (AT1) corresponding to the first criterion among the contents A1 and A2. If the first criterion (user's current emotional state) is "sorrow," the content selection module 171 selects the content B1 which has been output more frequently in association with the user's past emotional state as the content (AT2) corresponding to the first criterion (user's current emotional state) among the contents B1 and B2.

The content selection module 171 may select all the contents mapped to fulfilling the first criterion (user's current emotional state). Then the content output module 175 determines the output positions of the multiple contents using the past emotional state-based content output history. For example, if the first criterion (user's current emotional state) is "joy," the content selection module 171 selects both the contents A1 and A2 as the contents corresponding to the first criterion (user's current emotional state). Then the content output module 175 arranges the content A1 below the content A2 which has been played more frequently in accordance to the past user's emotional state.

Another content output procedure according to an embodiment of the present invention is described hereinafter.

The content selection module 171 may select contents based on the first criterion (user's current emotional state) additionally using current location information of the mobile terminal 100 which is acquired through the location measurement unit 130. In more detail, the content selection module 171 acquires multiple contents based on the first criterion (user's current emotional state). Next, the content selection module 171 selects the content associated with the area within a predetermined radius around the current location of the mobile terminal among the acquired contents. For example, if the content is information about recommended places (restaurant, café, etc.), the content selection module 171 may select the content appropriate for the current location of the mobile terminal 100 based on the current location information of the mobile terminal.

Of course, the content selection module 171 may acquire multiple contents associated with the area within the predetermined radius around the current location of the mobile terminal and then select the content fulfilling the first criterion (user's current emotional state) among the acquired contents.

Although the description has been directed to the case where the control unit 170, content selection module 171, and content output module 175 are configured separately and responsible for different functions, the present invention is not limited thereto but may be embodied in such a manner that the control unit, the content selection module and the content output module function in an integrated fashion.

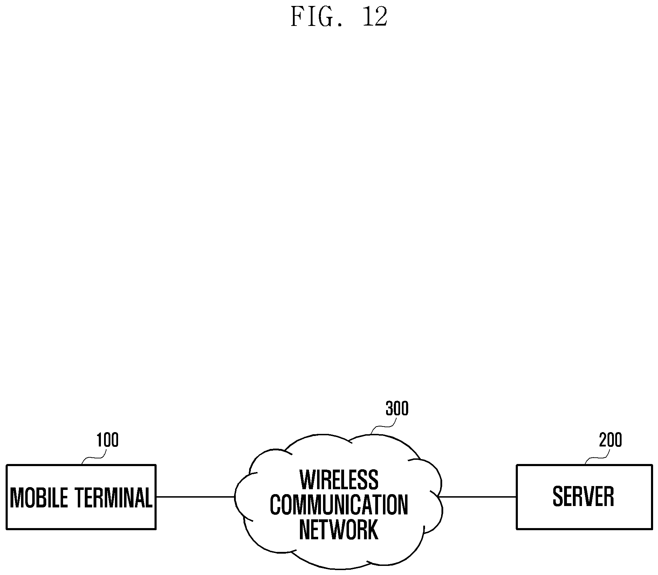

FIG. 12 is a schematic diagram illustrating a system for voice talk function of the mobile terminal according to an embodiment of the present invention.

Since the mobile terminal 100 here is identical to the mobile terminal described above with reference to FIG. 1, a detailed description of mobile terminal 100 is omitted herein. The mobile terminal 100 according to an embodiment of the present invention is connected to a server 200 through a wireless communication network 300.

In the above described embodiments, the control unit 170 of the mobile terminal 100 performs the first criterion acquisition operation, the first criterion-based content selection operation, the second criterion acquisition operation, and the content output scheme determination operation.

In this embodiment, however, the control unit 170 of the mobile terminal 100 exchanges data with the server by means of the radio communication unit 100, and performs at least one of the first criterion acquisition operation, the first criterion-based content selection operation, the second criterion acquisition operation, and the content output scheme determination operation.

For example, the control unit 170 of the mobile terminal 100 may provide the server 200 with the user's face image input through the camera unit 120 and the user's speech input through the audio processing unit 140. Then the server 200 acquires the first and second criteria based on the user's face image and user's speech. The server 200 provides the mobile terminal 100 with the acquired first second criteria.

Although the description has been made under the assumption of a single user, the present invention is not limited thereto, and it can also be applied to the case where multiple users use the mobile terminal 100. In this case, it is necessary to add an operation to identify the current user of the mobile terminal 100. The user's past content output scheme history, user's past content playback history, and user's past emotional state-based content output history may be stored per user. Accordingly, even when multiple users use the mobile terminal 100, it is possible to provide user-specific content.

As described above, the voice talk function-enabled mobile terminal and voice talk control method of the present invention are capable of selecting any content appropriate for the user's current emotional state and determining a content output scheme according to the user's age and gender. Accordingly, it is possible to provide the contents customized for individual user. Accordingly, the present invention is capable of implementing realistic voice talk function.

It will be appreciated that embodiments of the present invention can be realized in the form of hardware, software or a combination of hardware and software. Any such software may be stored in the form of volatile or non-volatile storage, for example a storage device like a ROM, whether erasable or rewritable or not, or in the form of memory, for example RAM, memory chips, device or integrated circuits or on an optically or magnetically readable medium, for example a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

Although embodiments of the invention have been described in detail hereinabove, a person of ordinary skill in the art will understand and appreciate that many variations and modifications of the basic inventive concept described herein will still fall within the scope of the invention as defined in the following claims.

## Claims

1. A mobile terminal (100) supporting a voice talk function, the terminal (100) comprising:
a display unit (150);
an audio processing unit (140);
a camera unit (120) configured to acquire (S310) an image of a user; and
a control unit (170) configured to:
acquire (S350) a first criterion associated with the user based on the image of the user;
determine (S230) whether a user's speech input is detected through the audio processing unit (140);
select (S240) content corresponding to the user's speech input based also on the first criterion, if the user's speech input is detected;
acquire (S260) a second criterion associated with the user based on the user's speech input;
determine (S270) a content output scheme based on the second criterion;
change at least one of words constituting the selected content, output speed of the selected content, and output size of the selected content, based on the determined content output scheme; and
output (S280) the selected content through at least one of the display unit and the audio processing unit according to the content output scheme.

2. The terminal (100) of claim 1, wherein the first criterion is a current emotional state of the user.

3. The terminal (100) of claim 1 or claim 2, wherein the second criterion is user information including at least one of an age and a gender of the user.

4. The terminal (100) of any one of the preceding claims, wherein the control unit (170) is further configured to select (S240, S250) the content based on:
the first criterion and information associated with contents for each first criteria;
the first criterion and a past content playback history associated with the user;
the first criterion and current location information of the terminal (100); or
content output history in association with past first criteria.

5. The terminal (100) of any one of claims 1 to 3, wherein the control unit (170) is further configured to select (S240) the content corresponding to a phrase acquired from the user's speech input based on the first criterion; or
wherein when a phrase acquired from the user's speech input is a request for changing the content output scheme, the control unit is configured to change the content output scheme.

6. The terminal (100) of claim 5, wherein the control unit (170) is further configured to acquire a second criterion based on words constituting the phrase.

7. The terminal (100) of any one of the preceding claims, wherein the control unit (170) is further configured to:
change the content output scheme determined based on the second criterion using past content output scheme history of the user; and
output the content according to the changed content output scheme.

8. The terminal (100) of any one of the preceding claims, the control unit is further configured to automatically acquire the second criterion based on at least one of the image of the user and the user's speech input.

9. The terminal (100) of claim 8, wherein the control unit (170) is further configured to acquire the first criterion from predetermined per-emotional state expression information based on facial expressions acquired from the image of the user.

10. The terminal (100) of any one of claims 1 to 7, wherein the control unit (170) is further configured to receive the first and second criteria through the audio processing unit (140).

11. A voice talk method of a mobile terminal (100), the method comprising:
acquiring (S310) an image of a user; and
acquiring (S350) a first criterion associated with the user based on the image of the user;
determining (S230) whether a user's speech input is detected through an audio processing unit (140) of the mobile terminal (100);
selecting (S240) content corresponding to the user's speech input and based also on the first criterion, if the user's speech input is detected;
acquiring (S260) a second criterion associated with the user based on the user's speech input;
determining (S270) a content output scheme based on the second criterion;
changing at least one of words constituting the selected content, output speed of the selected content, and output size of the selected content, based on the determined content output scheme; and
outputting (S280) the selected content through at least one of a display unit (150) and the audio processing unit (140) of the mobile terminal (100) according to the content output scheme.

12. The method of claim 11, wherein selecting (S240, S250) the content comprises selecting the content based on:
the first criterion and information associated with each first criteria;
the first criterion and a past content playback history associated with the user;
the first criterion and current location information of the terminal (100); or
content output history in association with past first criteria.

13. The method of claim 11 or claim 12, wherein selecting (S240) the content comprises selecting the content corresponding to a phrase acquired from the user's speech input based on the first criterion.

14. The method of claim 13, further comprising acquiring a second criterion based on words constituting the phrase.

15. The method of claim 11, wherein determining the content output scheme comprises changing, when a phrase acquired from the user's speech input is a request for changing the content output scheme, the content output scheme.

16. The method of any one of claims 11 to 15, wherein determining the content output scheme further comprises changing the content output scheme using past content output scheme history of the user.

17. The method of any one of claims 11 to 16, wherein acquiring the first criterion comprises acquiring the first criterion from predetermined per-emotional state expression information based on facial expressions acquired from the user image.

18. The method of any one of claims 11 to 17, further comprising automatically acquiring the second criterion based on the at least one of the image of the user and the user's speech input.

19. The method of any one of claims 11 to 18, further comprising receiving the first and second criteria through the audio processing unit (140).

## Patentansprüche

1. Tragbares Endgerät (100), das eine Sprachsprechfunktion unterstützt, wobei das Endgerät (100) umfasst:
eine Anzeigeeinheit (150);
eine Audioverarbeitungseinheit (140);
eine Kameraeinheit (120), die konfiguriert ist, um ein Bild eines Nutzers zu erwerben (S310), und eine Steuereinheit (170), die konfiguriert ist, um:
ein dem Nutzer zugeordnetes erstes Kriterium basierend auf dem Bild des Nutzers zu erwerben (S350);
zu bestimmen (S230), ob die Spracheingabe eines Nutzers durch die Audioverarbeitungseinheit (140) detektiert wurde;
entsprechend der Spracheingabe des Nutzers Inhalte auszuwählen (S240), auch basierend auf dem ersten Kriterium, wenn die Spracheingabe des Nutzers detektiert wurde;
ein dem Nutzer zugeordnetes zweites Kriterium basierend auf der Spracheingabe des Nutzers zu erwerben (S260);
einen Inhaltsausgabeplan basierend auf dem zweiten Kriterium zu bestimmen (S270); basierend auf dem bestimmten Inhaltsausgabeplan mindestens eines der den ausgewählten Inhalt, die Ausgabegeschwindigkeit des ausgewählten Inhalts und die Ausgabegröße des ausgewählten Inhalts konstituierenden Wörter zu ändern;
und den ausgewählten Inhalt über mindestens eine der Anzeigeeinheit und der Audioverarbeitungseinheit entsprechend dem Inhaltsausgabeplan auszugeben (S280).

2. Endgerät (100) nach Anspruch 1, wobei das erste Kriterium ein aktueller Emotionszustand des Nutzers ist.

3. Endgerät (100) nach Anspruch 1 oder 2, wobei das zweite Kriterium Nutzerinformationen sind, die mindestens eines eines Alters und eines Geschlechts des Nutzers enthalten.

4. Endgerät (100) nach einem der vorstehenden Ansprüche, wobei die Steuereinheit (170) ferner konfiguriert ist, um den Inhalt basierend auf Folgendem auszuwählen (S240, S250):
dem ersten Kriterium und Informationen, die den Inhalten für jedes erste Kriterium zugeordnet sind; dem ersten Kriterium und einem dem Nutzer zugeordneten vergangenen Inhaltsabspielverlauf; dem ersten Kriterium und aktuellen Standortinformationen des Endgeräts (100);
oder einem Inhaltsausgabeverlauf in Verbindung mit vergangenen ersten Kriterien.

5. Endgerät (100) nach einem der Ansprüche 1 bis 3, wobei die Steuereinheit (170) ferner konfiguriert ist, um den Inhalt entsprechend einer von der Spracheingabe des Nutzers basierend auf dem ersten Kriterium erworbenen Phrase auszuwählen (S240);
oder wobei, wenn eine von der Spracheingabe des Nutzers erworbene Phrase eine Anfrage zur Änderung des Inhaltsausgabeplans ist, die Steuereinheit konfiguriert ist, den Inhaltsausgabeplan zu ändern.

6. Endgerät (100) nach Anspruch 5, wobei die Steuereinheit (170) ferner konfiguriert ist, um ein zweites Kriterium basierend auf die Phrase konstituierenden Wörtern zu erwerben.

7. Endgerät (100) nach einem der vorstehenden Ansprüche, wobei die Steuereinheit (170) ferner konfiguriert ist, um:
den basierend auf dem zweiten Kriterium bestimmten Inhaltsausgabeplan mithilfe eines vergangenen Inhaltsausgabeplanverlaufs des Nutzers zu ändern;
und den Inhalt entsprechend dem geänderten Inhaltsausgabeplan auszugeben.

8. Endgerät (100) nach einem der vorstehenden Ansprüche, wobei die Steuereinheit ferner konfiguriert ist, um das zweite Kriterium basierend auf mindestens eines des Bilds des Nutzers und der Spracheingabe des Nutzers automatisch zu erwerben.

9. Endgerät (100) nach Anspruch 8, wobei die Steuereinheit (170) ferner konfiguriert ist, um das erste Kriterium aus vorgegebenen Emotionszustandsausdruckinformationen basierend auf aus dem Bild des Nutzers erworbenen Gesichtsausdrücken zu erwerben.

10. Endgerät (100) nach einem der Ansprüche 1 bis 7, wobei die Steuereinheit (170) ferner konfiguriert ist, um das erste und zweite Kriterium durch die Audioverarbeitungseinheit (140) zu empfangen.

11. Sprachsprechverfahren eines tragbaren Endgeräts (100), wobei das Verfahren umfasst:
Erwerben (S310) eines Bilds eines Nutzers;
und Erwerben (S350) eines dem Nutzer zugeordneten ersten Kriteriums basierend auf dem Bild des Nutzers;
Bestimmen (S230), ob die Spracheingabe eines Nutzers durch eine Audioverarbeitungseinheit (140) des tragbaren Endgeräts (100) detektiert wurde;
Auswählen (S240) von Inhalt entsprechend der Spracheingabe des Nutzers und auch basierend auf dem ersten Kriterium, wenn die Spracheingabe des Nutzers detektiert wurde;
Erwerben (S260) eines dem Nutzer zugeordneten zweiten Kriteriums basierend auf der Spracheingabe des Nutzers;
Bestimmen (S270) eines Inhaltsausgabeplans basierend auf dem zweiten Kriterium; Ändern, basierend auf dem bestimmten Inhaltsausgabeplan, mindestens eines der den ausgewählten Inhalt, die Ausgabegeschwindigkeit des ausgewählten Inhalts und die Ausgabegröße des ausgewählten Inhalts konstituierenden Wörter;
und Ausgeben (S280) des ausgewählten Inhalts über mindestens eine der Anzeigeeinheit (150) und der Audioverarbeitungseinheit (140) des tragbaren Endgeräts (100) entsprechend dem Inhaltsausgabeplan.

12. Verfahren nach Anspruch 11, wobei das Auswählen (S240, S250) des Inhalts das Auswählen des Inhalts basierend auf Folgendem umfasst:
dem ersten Kriterium und Informationen, die jedem ersten Kriterium zugeordnet sind; dem ersten Kriterium und einem dem Nutzer zugeordneten vergangenen Inhaltsabspielverlauf; dem ersten Kriterium und aktuellen Standortinformationen des Endgeräts (100); oder einem Inhaltsausgabeverlauf in Verbindung mit vergangenen ersten Kriterien.

13. Verfahren nach Anspruch 11 oder Anspruch 12, wobei das Auswählen (S240) des Inhalts das Auswählen des Inhalts entsprechen einer von der Spracheingabe des Nutzers basierend auf dem ersten Kriterium erworbenen Phrase umfasst.

14. Verfahren nach Anspruch 13, ferner umfassend Erwerben eines zweiten Kriteriums basierend auf die Phrase konstituierenden Wörtern.

15. Verfahren nach Anspruch 11, wobei das Bestimmen des Inhaltsausgabeplans das Ändern, wenn eine von der Spracheingabe des Nutzers erworbene Phrase eine Anfrage zum Ändern des Inhaltsausgabeplans ist, des Inhaltsausgabeplans umfasst.

16. Verfahren nach einem der Ansprüche 11 bis 15, wobei das Bestimmen des Inhaltsausgabeplans ferner das Ändern des Inhaltsausgabeplans mithilfe eines vergangenen Inhaltsausgabeplanverlaufs des Nutzers umfasst.

17. Verfahren nach einem der Ansprüche 11 bis 16, wobei das Erwerben des ersten Kriteriums das Erwerben des ersten Kriteriums aus vorgegebenen Emotionszustandsausdruckinformationen basierend auf aus dem Nutzerbild erworbenen Gesichtsausdrücken umfasst.

18. Verfahren nach einem der Ansprüche 11 bis 17, ferner umfassend das automatische Erwerben des zweiten Kriteriums basierend auf mindestens einem des Bilds des Nutzers und der Spracheingabe des Nutzers.

19. Verfahren nach einem der Ansprüche 11 bis 18, ferner umfassend Empfangen des ersten und zweiten Kriteriums durch die Audioverarbeitungseinheit (140).

## Revendications

1. Terminal mobile (100) supportant une fonction d'appel vocal, le terminal (100) comprenant :
une unité d'affichage (150) ;
une unité de traitement audio (140) ;
une unité de caméra (120) configurée pour acquérir (S310) une image d'un utilisateur ; et
une unité de commande (170) configurée pour :
acquérir (S350) un premier critère associé à l'utilisateur sur la base de l'image de l'utilisateur ;
déterminer (S230) si une entrée de parole d'utilisateur est détectée par le biais de l'unité de traitement audio (140) ;
sélectionner (S240) un contenu correspondant à l'entrée de parole d'utilisateur sur la base également du première critère, si l'entrée de parole d'utilisateur est détectée ;
acquérir (S260) un deuxième critère associé à l'utilisateur sur la base de l'entrée de parole d'utilisateur ;
déterminer (S270) un schéma de sortie de contenu sur la base du deuxième critère ; changer au moins l'un parmi des mots constituant le contenu sélectionné, une vitesse de sortie du contenu sélectionné, et une taille de sortie du contenu sélectionné, sur la base du schéma de sortie de contenu déterminé ;
et sortir (S280) le contenu sélectionné par le biais au moins de l'une de l'unité d'affichage et l'unité de traitement audio en fonction du schéma de sortie de contenu.

2. Terminal (100) selon la revendication 1, dans lequel le premier critère est un état émotionnel actuel de l'utilisateur.

3. Terminal (100) selon la revendication 1 ou 2, dans lequel le deuxième critère est une information d'utilisateur incluant au moins l'un de l'âge et du sexe de l'utilisateur.

4. Terminal (100) selon l'une quelconque des revendications précédentes, dans lequel l'unité de commande (170) est en outre configurée pour sélectionner (S240, S250) le contenu sur la base de :
le premier critère et des informations associées au contenu pour chaque premier critère ; le premier critère et un historique de lecture de contenu passé associé à l'utilisateur ;
le premier critère et des informations de localisation actuelle du terminal (100) ;
ou un historique de sortie de contenu en association avec des premiers critères passés.

5. Terminal (100) selon l'une quelconque des revendications 1 à 3, dans lequel l'unité de commande (170) est en outre configurée pour sélectionner (S240) le contenu correspondant à une phrase acquise depuis l'entrée de parole d'utilisateur sur la base du premier critère ;
ou dans lequel quand une phrase acquise depuis l'entrée de parole d'utilisateur est une requête de changement du schéma de sortie de contenu, l'unité de commande est configurée pour changer le schéma de sortie de contenu.

6. Terminal (100) selon la revendication 5, dans lequel l'unité de commande (170) est en outre configurée pour acquérir un deuxième critère sur la base de mots constituant la phrase.

7. Terminal (100) selon l'une quelconque des revendications précédentes, dans lequel l'unité de commande (170) est en outre configurée pour :
changer le schéma de sortie de contenu déterminé sur la base du deuxième critère en utilisant l'historique de schéma de sortie de contenu passé de l'utilisateur ;
et sortir le contenu en fonction du schéma de sortie de contenu changé.

8. Terminal (100) selon l'une quelconque des revendications précédentes, l'unité de commande est en outre configurée pour acquérir automatiquement le deuxième critère sur la base d'au moins l'une de l'image de l'utilisateur et l'entrée de parole de l'utilisateur.

9. Terminal (100) selon la revendication 8, dans lequel l'unité de commande (170) est en outre configurée pour acquérir le premier critère à partir d'informations d'expression d'état per-émotionnel prédéterminées sur la base d'expressions faciales acquises depuis l'image de l'utilisateur.

10. Terminal (100) selon l'une quelconque des revendications 1 à 7, dans lequel l'unité de commande (170) est en outre configurée pour recevoir les premier et deuxième critères par le biais de l'unité de traitement audio (140).

11. Procédé d'appel vocal d'un terminal mobile (100), le procédé comprenant : l'acquisition (S310) d'une image d'un utilisateur ;
et l'acquisition (S350) d'un premier critère associé à l'utilisateur sur la base de l'image de l'utilisateur ;
la détermination (S230) si une entrée de parole d'utilisateur est détectée par le biais d'une unité de traitement audio (140) du terminal mobile (100) ;
la sélection (S240) de contenu correspondant à l'entrée de parole d'utilisateur et également sur la base du premier critère, si l'entrée de parole d'utilisateur est détectée ;
l'acquisition (S260) d'un deuxième critère associé à l'utilisateur sur la base de l'entrée de parole d'utilisateur ;
la détermination (S270) d'un schéma de sortie de contenu sur la base du deuxième critère ; le changement d'au moins l'un parmi des mots constituant le contenu sélectionné, une vitesse de sortie du contenu sélectionné, et une taille de sortie du contenu sélectionné, sur la base du schéma de sortie de contenu déterminé ;
et la sortie (S280) du contenu sélectionné par le biais au moins de l'une d'une unité d'affichage (150) et l'unité de traitement audio (140) du terminal mobile (100) en fonction du schéma de sortie de contenu.

12. Procédé selon la revendication 11, dans lequel la sélection (S240, S250) du contenu comprend la sélection du contenu sur la base de :
le premier critère et des informations associées à chaque premier critère ; le premier critère et un historique de lecture de contenu passé associé à l'utilisateur ; le premier critère et des informations de localisation actuelle du terminal (100) ; ou un historique de sortie de contenu en association aux premiers critères passés.

13. Procédé selon la revendication 11 ou 12, dans lequel la sélection (S240) du contenu comprend la sélection du contenu correspondant à une phrase acquise depuis l'entrée de parole d'utilisateur sur la base du premier critère.

14. Procédé selon la revendication 13, comprenant en outre l'acquisition d'un deuxième critère sur la base de mots constituant la phrase.

15. Procédé selon la revendication 11, dans lequel la détermination du schéma de sortie de contenu comprend le changement, quand une phrase acquise depuis l'entrée de parole d'utilisateur est une requête de changement du schéma de sortie de contenu, du schéma de sortie de contenu.

16. Procédé selon l'une quelconque des revendications 11 à 15, dans lequel la détermination du schéma de sortie de contenu comprend en outre le changement du schéma de sortie de contenu en utilisant un historique de schéma de sortie de contenu passé de l'utilisateur.

17. Procédé selon l'une quelconque des revendications 11 à 16, dans lequel l'acquisition du premier critère comprend l'acquisition du premier critère à partir d'informations d'expression d'état per-émotionnel prédéterminées sur la base d'expressions faciales acquises depuis l'image de l'utilisateur.

18. Procédé selon l'une quelconque des revendications 11 à 17, comprenant en outre l'acquisition automatique du deuxième critère sur la base d'au moins l'une de l'image de l'utilisateur et l'entrée de parole d'utilisateur.

19. Procédé selon l'une quelconque des revendications 11 à 18, comprenant en outre la réception des premier et deuxième critères par le biais de l'unité de traitement audio (140).
